# EUROPEAN PATENT APPLICATION

(11) **EP 0 950 496 A2**
(43) Date of publication of application: **20.10.1999**
(21) Application number: 99302931.3
(22) Date of filing: 15.04.1999
(51) Int. Cl.: B29C 45/42

(54) **Robotic removal from mold of injection-molded products**

(30) Priority: 16.04.1998 US 61593
(71) Applicant: Universal Ventures, Cayman Islands (KY)
(72) Inventor: Brown, Paul Philip, San Diego, California 92130 (US); Sorensen, Jens Ole, North Side, Grand Cayman (KY)
(74) Representative: Wilson, Nicholas Martin

(57) **Abstract**

In a system for removing injection-molded products (10) from a mold (18) having a cavity part (14) and a core part (16), which when combined define at least one mold cavity for forming a product, the cavity part and the core part are separated in a generally horizontal direction, with the product being retained in the cavity part upon separation of the cavity part from the core part: and a robotic arm (20) including a product receiver (22) removes the retained product from the cavity part by means of the product receiver upon separation of the cavity part from the core part. The product receiver (22) is adapted for attracting an interior portion of the product (10) onto the receiver (22). The system is used for removing a product made of such a material that the product is retained in the cavity part upon separation of the mold parts when the product is injection molded at a high speed.

## Description

The present invention generally pertains to injection molding and is particularly directed to robotic removal from the mold and stacking of injection-molded products.

In one type of prior art system, in which injection-molded products are removed by a robotic arm from a mold, a cavity part and a core part are separated in a generally horizontal direction, with the product being retained on the core part; and a robotic arm including at least one product receiver removes the retained product from the core part by means of the at least one receiver. An injection-molded plastic product usually is retained on the core part due to shrinkage of the product about the core part during cooling before the mold is opened. A problem arises when using some plastic materials, such as polypropylene, because the product usually is undesirably retained in the cavity part during high-speed injection molding operations when the cycle time is very short, thereby terminating the molding cycle. In order to provide consistent molding operations, such means as undercuts and air valves have been used to assure that the product is always retained on the core part notwithstanding the duration of the cycle time.

The present invention provides a system for removing injection-molded products from a mold having a cavity part and a core part, which when combined define at least one mold cavity for forming a product, the system comprising means for separating the cavity part and the core part in a generally horizontal direction, with the product being retained in the cavity part upon separation of the cavity part from the core part; and a robotic arm including at least one product receiver adapted for removing the retained product from the cavity part by means of the at least one receiver upon separation of the cavity part from the core part; wherein the at least one receiver is adapted for attracting an interior portion of the product onto the receiver.

The present invention further provides a method of removing injection-molded products from a mold having a cavity part and a core part, which when combined define at least one mold cavity for forming a product, the method comprising the steps of:
(a) separating the cavity part and the core part in a generally horizontal direction, with the product being retained in the cavity part upon separation of the cavity part from the core part; and
(b) upon separation of the cavity part from the core part, removing the retained product from the cavity part by means of at least one product receiver included on a robotic arm; wherein the at least one receiver is adapted for attracting an interior portion of the product onto the receiver; and
   wherein step (b) includes the step of:
(c) attracting an interior portion of the product onto the at least one receiver from the cavity part.

The method and system of the present invention are particularly useful for removing a hollow product, such as a cup, from the mold when the product is made of such a material that the product is retained in the cavity part upon separation of the mold parts when the product is injection molded at a high speed.

Additional features of the present invention are described with reference to the detailed description of the preferred embodiments.

FIG. 1 is a schematic view illustrating the portion of the system of the present invention that is adapted for robotic removal of a product from mold, as configured when the mold is closed with the product formed within the mold cavity.

FIG. 2 is a schematic view illustrating the portion of the system shown in FIG. 1, as configured when the core part is separated from the cavity part with the product being retained in the cavity part.

FIG. 3 is a schematic view illustrating the portion of the system shown in FIGS. 1 and 2, as configured when the robotic arm including the receiver is positioned between the separated core part cavity part.

FIG. 4 is a schematic view illustrating the portion of the system shown in FIGS. 1, 2 and 3, as configured when the product is received by the robotic arm positioned between the separated core part cavity part.

FIG. 5 is a schematic view illustrating the portion of the system shown in FIGS. 1, 2, 3 and 4, as configured when the removed product is transferred from the robotic arm to a pneumatic conveyor tube.

FIG. 6 is a schematic view illustrating transfer of the removed product by a pneumatic conveyor tube from a robotic arm to a preferred embodiment of a stacking apparatus according to the present invention.

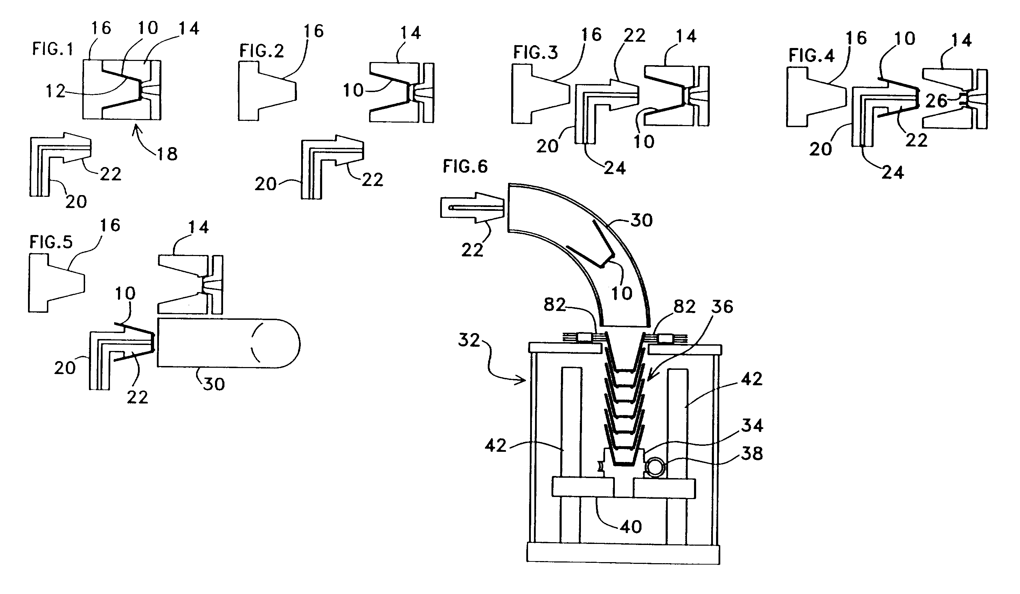

An injection-molded product 10 is formed in a mold cavity 12 defined between a cavity part 14 and a core part 16 of a mold 18, when the mold 18 is closed to combine the cavity part 14 and a core part 16, as shown in FIG. 1.

The cavity part 14 and the core part 16 are separated in a generally horizontal direction, with the product 10 being retained in the cavity part 14 upon separation of the cavity part 14 from the core part 16, as shown in FIG. 2. To assure that products are consistently retained in the cavity part 14 when the cavity part 14 and the core part 16 are separated, a partial vacuum is created between the product 10 and the cavity section 14 so as to enhance the adherence of the product 10 to the cavity section 14 and/or a compressed air is imparted against the opposite end of the product 10.

Upon separation of the cavity part 14 from the core part 16, a robotic arm 20 including at least one product receiver 22 is moved into the space between the separated cavity part 14 and core part 16, as shown in FIG. 3, and removes the retained product 10 from the cavity part 14 by means of the receiver 22, as shown in FIG. 4. Preferably, the receiver 22 is shaped for insertion into a portion of the product 10 vacated by the core part 16 upon said separation of the cavity part 14 from the core part 16. In one embodiment, as shown in FIGS. 1-4, the receiver includes an air duct 24 that is connected to a vacuum source (not shown) for attracting the product 10 onto the receiver 22 from the cavity part 14 and the cavity part 14 also includes an ejector 26 for ejecting the product 10 onto the receiver 22 from the cavity part 14. In alternative embodiments, only either the vacuum source or the ejector 26 is used for removing the product 10 from the cavity part 14 and onto the receiver 22. A robotic arm having a plurality of product receivers coupled to a vacuum source is described in U.S. Patent No. 5.234.328 to Willson et al.

Referring again to the embodiment shown in FIGS. 1, 2, 3 and 4, the removed product 10 is delivered by the robot arm 20 to a pneumatic conveyor tube 30, as shown in FIG. 5, and the removed product 10 is then transferred by the pneumatic conveyor tube 30 from the receiver 22 to a stacking apparatus 32, as shown in FIG. 6.

The stacking apparatus 32 includes a receptacle 34, into which the removed products 10 fall from the pneumatic conveyor tube 30 to form a stack of nested products 36, and a worm-gear drive 38 for rotating the receptacle 34 so that the products 10 are stacked relative to one another such that a series of stacked products 10 have a progressively different rotational alignment. The receptacle 34 is mounted on a platform 40 that is lowered along its guide posts 42 as the height of the stack 36 increases so that the top of the stack 36 is maintained near the top of the stacking apparatus 32.

The system and method described above may be used for removing products from a mold in which a plurality of mold cavities are defined between the cavity part and the core part. In such multi-cavity embodiments, the robotic arm employed for removing the products from the cavity part includes a plurality of separate product receivers, and a corresponding plurality of pneumatic conveyor tubes respectively transfer the products from the separate product receivers to a corresponding plurality of separate stacking apparatuses.

The advantages specifically stated herein do not necessarily apply to every conceivable embodiment of the present invention. Further, such stated advantages of the present invention are only examples and should not be construed as the only advantages of the present invention.

While the above description contains many specificities, these should not be construed as limitations on the scope of the present invention, but rather as examples of the preferred embodiments described herein. Other variations are possible and the scope of the present invention should be determined not by the embodiments described herein but rather by the claims and their legal equivalents.

## Claims

1. A system for removing injection-molded products (10) from a mold (18) having a cavity part (14) and a core part (16), which when combined define at least one mold cavity for forming a products the system comprising
means for separating the cavity part (14) and the core part (16) in a generally horizontal direction, with the product (10) being retained in the cavity part upon separation of the cavity part from the core part; and
a robotic arm (20) including at least one product receiver (22) adapted for removing the retained product (10) from the cavity part (14) by means of the at least one receiver upon separation of the cavity part from the core part (16);
wherein the at least one receiver (22) is adapted for attracting an interior portion of the product (10) onto the receiver (22).

2. A system according to Claim 1, wherein the receiver (22) includes an air duct (24) that is connected to a vacuum source for attracting the interior portion of the product (10) onto the receiver (22) from the cavity part (14).

3. A system according to Claim 1 or 2, wherein the receiver (22) is shaped for insertion into an interior portion of the product (10) vacated by the core part (16) upon said separation of the cavity part (14) from the core part (16).

4. A system according to Claim 1, 2 or 3, wherein the cavity part (14) also includes an ejector (26) for ejecting the product (10) onto the receiver (22) from the cavity part (14).

5. A method of removing injection-molded products (10) from a mold (18) having a cavity part (14) and a core part (16), which when combined define at least one mold cavity for forming a products the method comprising the steps of:
(a) separating the cavity part (14) and the core part (16) in a generally horizontal direction, with the product (10) being retained in the cavity part upon separation of the cavity part from the core part; and
(b) upon separation of the cavity part (14) from the core part (16), removing the retained product from the cavity part by means of at least one product receiver (22) included on a robotic arm (20);
wherein the at least one product receiver (22) is adapted for attracting an interior portion of the product (10) onto the receiver (22); and
wherein step (b) includes the step of:
(c) attracting an interior portion of the product (10) onto the at least one receiver (22) from the cavity part (14).

6. A method according to Claim 5, for removing a product made of such a material that the product is retained in the cavity part upon separation of the mold parts when the product is injection molded at a high speed.

7. A method according to Claims 5 or 6, wherein the product is a cup.

8. A method according to Claim 5, 6 or 7, wherein step (c) includes the step of:
(d) using a said receiver (22) that includes an air duct (24) that is connected to a vacuum source for attracting the interior portion of the product (10) onto the receiver (22) from the cavity part (14).

9. A method according to Claim 5, 6, 7 or 8, wherein the at least one product receiver (22) is shaped for insertion into an interior portion of the product (10) vacated by the core part (16) upon said separation of the cavity part (14) from the core part (16) to attract the interior portion of the product (10) onto the receiver (22); and step (b) further includes the step of:
(e) inserting the receiver (22) into the interior portion of the product (10).

10. A method according to Claim 5, 6, 7, 8 or 9, further comprising the step of:
(e) ejecting the product (10) onto the receiver (22) from the cavity part (14).
